# DEMANDE DE BREVET EUROPEEN

(11) **EP 1 628 443 A1**
(43) Date de publication de la demande: **22.02.2006**
(21) Numéro de dépôt: 04292054.6
(22) Date de dépôt: 16.08.2004
(51) Int. Cl.: H04L 12/56, H04L 12/24

(54) **Procédé apte à rendre un équipement de réseau proactif**

(71) Demandeur: UNIVERSITE PIERRE ET MARIE CURIE, 75252 Paris Cédex 05 (FR); Universite Technologique de Troyes, 10010 Troyes Cedex (FR)
(72) Inventeur: Gaiti, Dominique, 75011 Paris (FR); Pujolle, Guy, 92320 Chatillon (FR)
(74) Mandataire: Wagret, Frédéric

(57) **Abrégé**

La présente invention concerne un procédé apte à rendre proactif un équipement de réseau, ledit procédé comprenant l'échange de données entre un agent intelligent (13) et ledit équipement de réseau, avantageusement constitué d'au moins un routeur (1, 4, 20).

## Description

La présente invention concerne un procédé apte à rendre un équipement de réseau proactif.

Par définition, un système proactif est un système dont le comportement se modifie et s'adapte en temps réel en fonction de son environnement d'une manière non programmée à l'avance et qui est déduite par des techniques de raisonnement, d'échange et d'apprentissage.

Un objet proactif possède donc un organe de commande qui permet à l'objet de posséder les propriétés décrites ci-dessus qui lui confère la possibilité de modifier ses actions en fonction de l'environnement extérieur à l'objet.

Un système proactif est donc apte à raisonner, à se modifier et à prendre des décisions en fonction de l'évolution du système et de son environnement.

Un équipement de réseau, par exemple un routeur, un boîtier fonctionnel ou un coupe-feu, a pour objectif de rendre des fonctions, lors de l'acheminement de blocs d'informations, comme le routage, la suppression, la mise en attente, le changement de priorité, de ces blocs d'informations.

Les blocs d'informations peuvent être des paquets, des trames ou toute autre entité rassemblant des éléments binaires et contenant les données qui doivent être transportée de l'émetteur vers le récepteur. Par mesure de simplicité, ces blocs de données sont appelés paquets dans la suite de la description.

Le procédé selon l'invention s'applique sur tout type d'équipement de réseau possédant des fonctions de traitement sur les paquets, par exemple sur des routeurs, notamment sur des routeurs grand public, professionnels, ADSL, gigarouteurs, terarouteurs, sur des commutateurs, notamment sur des commutateurs de périphérie, d'infrastructure, de multidiffusion ou d'agence, sur des routeurs-commutateurs, notamment des LSP (Label Switch Router), ou sur des boîtiers de contrôle, notamment des boîtiers coupe-feu, des appliances, etc.

Un réseau d'échanges d'informations est constitué d'une pluralité d'équipements de réseaux aptes à véhiculer des paquets d'un émetteur vers un récepteur.

Conventionnellement, les équipements de réseaux ont quelques actions élémentaires à leur disposition pour contrôler le transfert d'un port d'entrée de l'équipement vers un port de sortie.

Ces actions élémentaires sont, par exemple, le rejet de paquets, le reroutage du paquet, le changement de priorité du paquet, la mise en attente, etc.

La prise de décision de ces actions élémentaires par les équipements de réseaux est faite sur la base d'informations locales à l'équipement de réseau et ne prend donc pas en compte des événements extérieurs à l'équipement de réseau lui-même, par exemple l'environnement, le profil des utilisateurs, l'état des autres équipements de réseaux et les flots les traversant.

Cette prise de décision repose donc sur une décision statique, ce qui veut dire qu'un même événement dans un contexte donné produira toujours la même réaction.

La présente invention se propose de rendre les décisions dynamiques à l'aide d'un procédé apte à rendre proactif un équipement de réseau permettant ainsi l'obtention d'un réseau d'échange apte à s'adapter à tout un ensemble de conditions et d'observations reconnues ou apprises par l'expérience et pouvant anticiper certaines actions d'une manière autonome.

Il est ainsi possible selon l'invention à un équipement de réseau de retenir et appliquer certaines actions qui sont adaptées à certaines conditions qui auront été observées, reconnues et/ou apprises.

Il est également possible selon l'invention de réaliser un réseau apte à anticiper des problèmes de congestion du réseau, de retard dans l'acheminement d'un paquet, de panne d'un noeud de transfert, de coupure d'une liaison ou d'une attaque par un pirate.

La présente invention porte sur un procédé apte à rendre un équipement de réseau proactif, avantageusement constitué d'un routeur.

Plus précisément, ledit procédé comprend l'échange de données entre un agent intelligent et un routeur comprenant avantageusement un sélectionneur et un ordonnanceur.

De manière avantageuse, l'agent intelligent est composé de sous-agents intelligents qui sont un sous-agent du sélectionneur, un sous-agent de l'ordonnanceur, et d'autres sous-agents notamment un sous-agent d'un métreur, d'un marqueur, d'un suppresseur.

Afin de permettre la proactivité, le routeur est relié à un organe de gestion des fonctions du routeur relié au sélectionneur, à l'ordonnanceur, à un métreur, un marqueur et un suppresseur ; une relation continue existant entre l'organe de gestion des fonctions du routeur et l'agent intelligent.

Avantageusement, l'organe de gestion est composé d'au moins un processeur et d'une mémoire et est apte à configurer le sélectionneur, l'ordonnanceur, le métreur, le marqueur et le suppresseur.

De manière alternative, le procédé selon l'invention repose sur une liaison directe entre l'agent intelligent, le sélectionneur, l'ordonnanceur, le métreur, le marqueur et le suppresseur.

La présente invention est maintenant décrite à l'aide d'exemples uniquement illustratifs et nullement limitatifs de la portée de l'invention, et à partir des illustrations ci-jointes, dans lesquelles :
La figure 1 représente le mode de fonctionnement d'un routeur de première génération ;
La figure 2 représente le mode de fonctionnement simplifié d'un routeur de deuxième génération ;
La figure 3 représente le mode de fonctionnement d'un routeur de deuxième génération rendu proactif grâce au procédé selon l'invention ;
La figure 4 représente le mode de fonctionnement d'un routeur de deuxième génération dans lequel deux lignes de sortie sont disponibles ;
La figure 5 représente le mode de fonctionnement d'un routeur de troisième génération ;
La figure 6 représente le mode de fonctionnement d'un routeur de troisième génération rendu proactif grâce au procédé selon l'invention ;
La figure 7 représente le mode de fonctionnement schématique des échanges de données entre un agent intelligent 13 et l'organe de gestion 11 d'un routeur rendu proactif selon le procédé de l'invention ;
La figure 8 représente un second mode de fonctionnement schématique des échanges de données entre un agent intelligent 13 et l'organe de gestion 11 d'un routeur rendu proactif selon le procédé de l'invention.

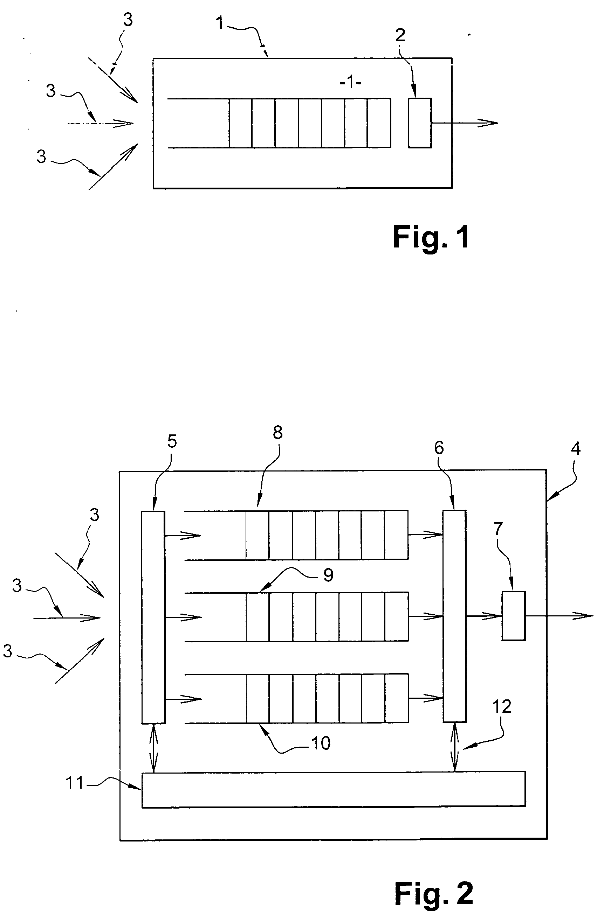

La figure 1 représente une vue schématique du mode de fonctionnement d'un routeur 1 de première génération, de type connu en soi.

Par mesure de commodité, il est fait référence dans la suite de la description à un noeud de transfert d'informations sous la forme d'un routeur, étant entendu que le procédé selon l'invention peut s'appliquer à tout type d'élément de transfert qui possède des fonctions à mettre en oeuvre lors de l'acheminement de paquets.

Le routeur est inclus dans un réseau d'échanges d'informations, les échanges s'effectuant sous forme de paquets.

Les actions prises par le noeud de transfert dans le réseau sont des actions classiques à savoir le rejet de paquets, la temporisation d'un paquet, l'accélération d'un paquet, le reroutage, etc.

Le routeur 1 de première génération présente une interface de transmission 2 permettant de transmettre les différents paquets d'informations qu'il a reçu sur les ports d'entrée 3 vers un autre élément de transfert, par exemple un autre routeur.

La figure 2 représente une vue schématique du mode de fonctionnement d'un routeur 4 de seconde génération dans un mode simplifié sans tenir compte de la fonction de routage.

Le routeur de seconde génération 4 présente sur ses ports d'entrée 3 des paquets d'informations qui entrent dans un sélectionneur 5 de type connu en soi.

Par définition, un sélectionneur est un organe qui sélectionne une file menant à un traitement spécifique.

Sur son port de sortie, le routeur de seconde génération 4 présente un ordonnanceur 6, de type connu en soi et une interface d'émission 7, également de type connu en soi.

Par définition, un ordonnanceur est un organe qui choisit la file d'attente qui va être servie et une interface est un passage entre deux organes permettant un échange d'informations.

Plus précisément, le sélectionneur 5 est apte à sélectionner les paquets d'informations arrivant sur les ports d'entrée 3 en fonction, par exemple, de l'adresse IP du destinataire, du protocole encapsulé dans le paquet, de caractéristiques provenant des champs de contrôle du paquet IP ou de toute autre caractéristique détectée par le routeur.

Par la suite, de manière statique, le sélectionneur 5 positionne les paquets d'informations dans l'une des files (8, 9, 10) menant à l'ordonnanceur 6.

Par définition, une file est un organe qui permet de mémoriser des clients dans un ordre déterminé.

L'ordonnanceur 6 décide alors, de manière statique, c'est-à-dire en ne tenant compte que d'un algorithme implanté dans le routeur par son constructeur, lequel des paquets va être transféré vers le prochain routeur.

De nombreux algorithmes peuvent être utilisés par l'ordonnanceur 6, notamment l'algorithme courant de type Weighted Fair Queueing (WFQ) qui détermine un poids à chaque file d'attente (8, 9, 10) ou le Weighted Random Early Detection (WRED) qui marque ou rejette des paquets en fonction du nombre de paquets présents dans les mémoires tampons du routeur.

Dans un routeur classique, un seul algorithme est implanté. Dans les routeurs proactifs, plusieurs algorithmes peuvent être disponibles et sélectionnés en temps réel.

Le routeur possède un organe de gestion 11 des fonctions du routeur, de type connu en soi.

Par définition, un organe de gestion 11 est un organe apte à configurer les éléments matériels et logiciels d'un équipement, par exemple un routeur.

En fonctionnement, l'organe de gestion 11 est soit programmé directement par un ingénieur soit reçoit des ordres de configuration à distance. Grâce à ces ordres de configuration, il modifie le matériel ou le logiciel suivant les ordres qui lui ont été donnés.

Par exemple, si l'ordre est de classer tous les paquets portant une certaine adresse IP dans la file d'attente la plus prioritaire, l'organe de gestion 11 configure le matériel ou le logiciel qui va examiner les paquets de telle sorte que si l'adresse de destination d'un paquet est celle qui a été précisée, alors le paquet est affecté à la file d'attente la plus prioritaire.

Avantageusement, l'organe de gestion 11 est composé d'un processeur et de mémoire et est apte à configurer le sélectionneur 5 et l'ordonnanceur 6.

Le sélectionneur 5 et l'ordonnanceur 6 sont tous deux reliés globalement à l'organe de gestion 11 qui leur envoie des primitives de configuration au travers d'une interface 12.

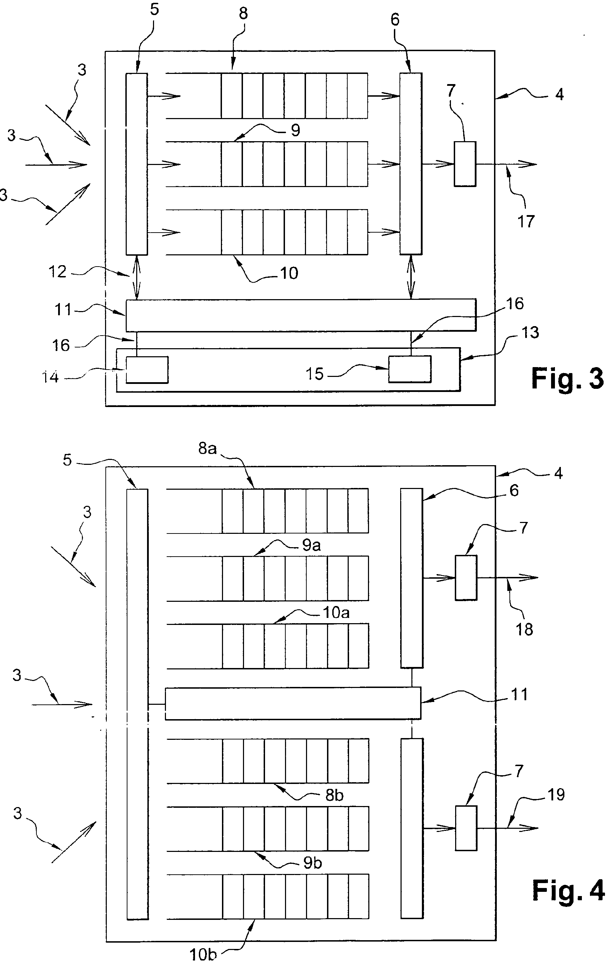

La figure 3 représente une vue schématique du mode de fonctionnement d'un routeur 4 de seconde génération rendu proactif grâce au procédé selon l'invention.

Les mêmes éléments par rapport au routeur de la figure 2 portent les mêmes numéros de référence.

L'organe de gestion du routeur 11 est relié à un agent intelligent 13 du système, cette partie proactive 13 du système comportant deux sous-agents intelligents (14, 15) respectivement reliés à l'organe de gestion 11, lui-même relié au sélectionneur 5 et à l'ordonnanceur 6.

L'agent intelligent 13 est inclus dans le routeur 4.

De manière avantageuse, les deux sous-agents intelligents (14, 15) sont aptes à prendre des décisions de configuration non statiques.

Plus précisément, les deux sous-agents intelligents (14, 15) sont des agents intelligents aptes à décider en temps réel de la sélection des paquets arrivant au sélectionneur 5 et de l'ordonnancement des paquets d'informations ayant suivis les files (8, 9, 10) et arrivant à l'ordonnanceur 6, toujours par l'intermédiaire de l'organe de gestion 11.

L'agent intelligent 13 est apte à communiquer avec l'organe de gestion 11 des fonctions du routeur au travers d'une interface 16 qui permet l'échange de primitives de configuration.

Le routeur 4 selon la figure 3 présente un seul port de sortie 17, étant entendu qu'il peut présenter autant de ports de sortie que nécessaires.

La figure 4 représente un routeur de seconde génération 4 dans lequel deux lignes de sortie 18 et 19 sont disponibles. Ce routeur possède une fonction de routage pour choisir entre la ligne de sortie 18 et 19.

Le routeur de deuxième génération contient un organe de gestion des fonctions du routeur 11, déjà défini mais configurant ici, en plus de la configuration des éléments déjà indiqués, les organes s'occupant du routage.

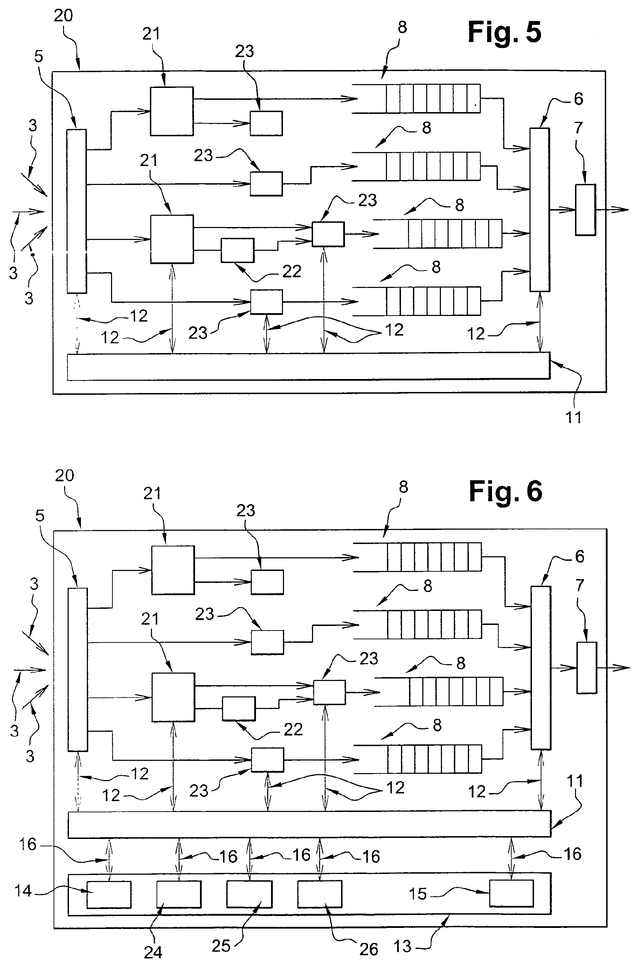

La figure 5 représente un routeur de troisième génération 20 simplifié ne traitant qu'une seule ligne de sortie. Son extension en utilisant la fonction de routage serait faite comme expliqué précédemment pour la figure 4 par rapport à la figure2.

Le routeur de troisième génération 20 présente sur ses port d'entrée 3 des paquets d'informations qui entrent dans un sélectionneur 5 de type connu en soi.

Une fois la sélection effectuée, le paquet peut entrer dans des organes de type métreur 21, marqueur 22, suppresseur 23 et file d'attente 8, tous ces organes étant connus en soi.

Sur son port de sortie, le routeur de troisième génération 20 présente un ordonnanceur 6, de type connu en soi et une interface d'émission 7, également de type connu en soi.

Par définition, un métreur 21 est un organe capable de mesurer les caractéristiques d'un flot comme le temps entre l'arrivée de deux paquets.

Par définition, un marqueur 22 est un organe capable de mettre ou de changer une marque à l'intérieur du paquet, par exemple une marque de priorité.

Par définition, un suppresseur 23 est un organe capable de supprimer un paquet.

Le routeur possède un organe de gestion 11, de type connu en soi.

Par exemple, si l'ordre est de déterminer le temps qui s'est écoulé depuis le précédent paquet, de supprimer les paquets portant une certaine adresse IP ou de modifier la marque d'un paquet, l'organe de gestion 11 configure le matériel et le logiciel du routeur pour qu'ils puisent effectuer ce travail.

Le sélectionneur 5, l'ordonnanceur 6, les métreurs 21, les marqueurs 22 et les suppresseur 23 sont tous reliés à l'organe de gestion 11 qui leur envoie des primitives de configuration au travers d'une interface 12.

La figure 6 représente une vue schématique du mode de fonctionnement d'un routeur 20 de troisième génération rendu proactif grâce au procédé selon l'invention.

Les mêmes éléments par rapport au routeur de la figure 3 portent les mêmes numéros de référence.

L'organe de gestion du routeur 11 est relié à un agent intelligent 13 du système, cette partie proactive 13 du système comportant cinq sous-agents intelligents (14, 15, 24, 25, 26) respectivement reliés à l'organe de gestion 11, lui-même relié au sélectionneur 5, à l'ordonnanceur 6, aux métreurs 21, aux marqueurs 22 et aux suppresseurs 23.

L'agent intelligent 13 est inclus dans le routeur 20.

De manière avantageuse, les cinq sous-agents intelligents (14, 15, 24, 25, 26) sont aptes à prendre des décisions de configuration non statiques.

Plus précisément, les cinq sous-agents intelligents (14, 15, 24, 25, 26) sont des agents intelligents aptes à décider en temps réel de la sélection des paquets arrivant au sélectionneur 5, de l'ordonnancement des paquets d'informations ayant suivis les files (8, 9, 10) et arrivant à l'ordonnanceur 6, des paramètres à mesurer par les métreurs 21, du marquage effectué par les marqueurs 22, et de la suppression de paquets par les suppresseurs 23, toujours par l'intermédiaire de l'organe de gestion.

Par définition, un agent intelligent est un agent logiciel apte à réaliser les fonctions de raisonnement, de communication et d'autonomie.

L'agent intelligent peut être de tout type, par exemple sous la forme d'un agent réactif, de type connu en soi, ou d'un agent cognitif, de type connu en soi, ou sous la forme de tout type d'agent intelligent permettant la formation d'un système multi-agent, c'est-à-dire un ensemble d'agents travaillant ensemble pour atteindre le même but.

Les sous-agents intelligents (14, 15, 24, 25, 26) sont reliés à l'organe de gestion 11 par une interface 16 sur laquelle transitent des primitives, c'est-à-dire des messages spécifiques qu'ils échangent.

Le procédé selon l'invention repose sur l'introduction dans un routeur d'un agent intelligent 13 relié de façon continue à l'organe de gestion des fonctions du routeur, l'agent intelligent pouvant être composé d'agents élémentaires effectuant des tâches pour l'agent intelligent.

L'agent intelligent 13 peut être de type très divers comme un agent réactif, connu en soi, ou un agent cognitif, également connu en soi, ou tout autre type d'agent intelligent qui permet de former un système multi-agent, c'est-à-dire un ensemble d'agents travaillant ensemble pour atteindre le même but.

L'agent peut effectuer toutes les tâches du procédé ou se composer de plusieurs agents qui effectuent des tâches liées à des fonctions spécifiques et qui globalement forment l'agent intelligent. Le choix du nombre de sous-agents est conditionné par les performances à atteindre, le nombre de fonctions à mettre en place, la décomposition éventuelle de fonctions en sous-fonctions, etc.

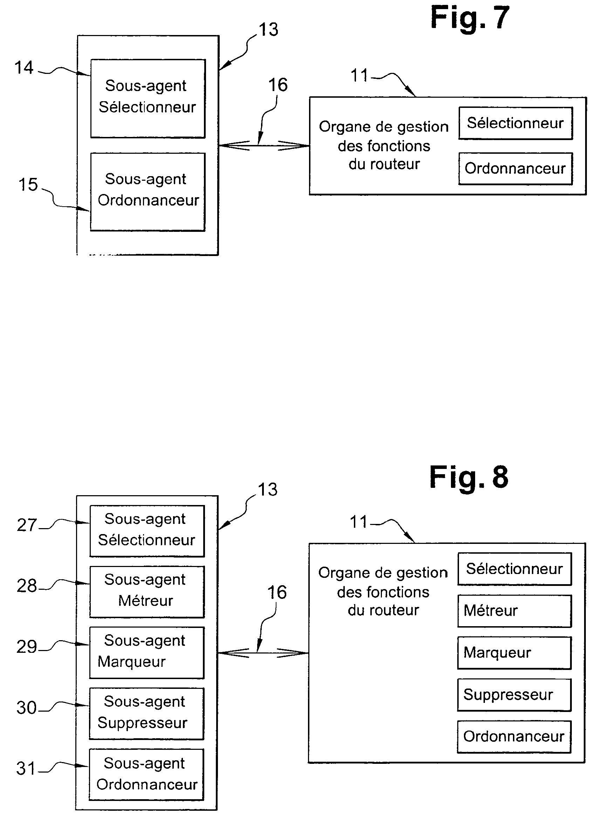

La figure 7 représente le mode de fonctionnement schématique des échanges de données entre un agent intelligent 13 et l'organe de gestion 11 d'un routeur rendu proactif selon le procédé de l'invention.

Selon la figure 7, nous avons supposé que l'agent intelligent 13 est constitué de deux sous-agents : le sous-agent du sélectionneur 14 et le sous-agent de l'ordonnanceur 15, l'ensemble de ces deux sous-agents (14, 15) formant l'agent intelligent 13.

L'agent intelligent 13 reçoit de manière continue des informations de la part des autres routeurs du réseau d'échange. Ils forment avec l'ensemble des agents intelligents des différents équipements du réseau global un système multi-agent.

L'agent intelligent 13 communique avec l'organe de gestion 11 des fonctions du routeur au travers d'une interface 16 qui permet l'échange de primitives de configuration.

La figure 8 représente un second mode de fonctionnement schématique des échanges de données entre un agent intelligent 13 et l'organe de gestion 11 d'un routeur rendu proactif selon le procédé de l'invention.

Selon la figure 8, nous avons supposé que l'agent intelligent 13 est constitué de cinq sous-agents : le sous-agent 27 du sélectionneur 5, le sous-agent 31 de l'ordonnanceur 6, le sous-agent 28 du métreur 21, le sous agent 29 du marqueur 22 et le sous-agent 30 du suppresseur 23, l'ensemble de ces cinq sous-agents (27, 28, 29, 30, 31) formant l'agent intelligent 13.

L'agent intelligent 13 communique avec l'organe de gestion 11 des fonctions du routeur au travers d'une interface 16 qui permet l'échange de primitives de configuration.

L'agent intelligent 13 reçoit de manière continue des informations de la part des autres routeurs. Ils forment avec l'ensemble des agents intelligents des différents équipements du réseau global un système multi-agent.

Le procédé consiste en une relation continue entre l'agent intelligent 13 et l'organe de gestion des fonctions du routeur 11.

Toutefois, de manière alternative l'agent intelligent 13 peut être directement associé au sélectionneur 5, à l'ordonnanceur 6, au métreur 21, au marqueur 22 et au supresseur 23 et non à un organe de gestion 11.

Avantageusement, l'agent intelligent 13 gère des suites de seuils S1, S2, S3, .., Sn.

Par exemple, on considère qu'une suite de deux seuils S1 et S2 définit le comportement suivant :
- si l'état ne dépasse pas le seuil S1 alors l'agent ne prend aucune décision,
- si l'état dépasse le seuil S1 mais reste inférieur à S2 alors l'agent prend une décision qui est transmise à l'organe de gestion des fonctions du routeur par l'intermédiaire d'une primitive de configuration.

Si l'état dépasse le seuil S2 alors l'agent intelligent 13 envoie une nouvelle primitive de configuration à l'organe de gestion 11.

De même lorsque les seuils sont franchis en descendant des primitives de configuration sont envoyées à l'organe de gestion 11.

Par exemple, le seuil S1 peut être un remplissage moyen des mémoires des routeurs du réseau égal à 50 % de la mémoire disponible.

Le seuil S2 peut être un remplissage moyen des mémoires des routeurs du réseau égal à 80%.

Des seuils beaucoup plus complexes faisant intervenir plusieurs paramètres peuvent être définis.

Les valeurs des seuils S1 et S2 sont en fait définies dynamiquement par l'agent intelligent 13 en fonction de ses connaissances.

Les primitives indiquent l'algorithme à mettre en oeuvre (WFQ, WRED, etc.) et donnent les valeurs des paramètres pour permettre à l'organe de gestion 11 de configurer le sélectionneur 5 et l'ordonnanceur 6.

Avantageusement, le procédé selon l'invention permet la configuration automatique des routeurs suivant les décisions de l'agent intelligent et le contrôle des équipements de réseau par un agent intelligent les rendant proactifs.

Egalement à titre d'exemple, toujours en considérant que l'agent intelligent 13 gère des suites de seuils S1, S2, S3, ...., Sn, nous supposons que, si n = 3, la suite S1, S2 et S3 définit le comportement suivant : si l'état du routeur franchit un seuil en montant ou en descendant, l'agent intelligent 13 envoie une primitive de configuration à l'organe de gestion 11, la valeur de ces seuils étant déterminée dynamiquement par l'agent intelligent en fonction de ses connaissances et du raisonnement qu'il peut effectuer sur ses connaissances.

Par exemple, le seuil S1 est déterminé par le taux des arrivées dans le routeur qui est égal à 40% de la capacité des lignes d'entrées.

Par exemple, le seuil S2 a pour valeur de 60% de la capacité des lignes d'entrée et le seuil S3 a pour valeur 80% et a une capacité de remplissage de la mémoire du noeud au moins égale à 70%.

Les primitives indiquent un algorithme à mettre en oeuvre et les valeurs des paramètres pour permettre à l'organe de gestion 11 de configurer le sélectionneur 5, l'ordonnanceur 6, le métreur 21, le marqueur 22 et le suppresseur 23, et tout autre élément constitutif d'un routeur.

Les valeurs des paramètres peuvent être en cas de franchissement de la valeur S1 : la suppression de tous les paquets de priorité la plus basse ; en cas de franchissement de la valeur S2 : la suppression de tous les paquets de la priorité 2 et en cas de franchissement de la valeur S3 : la suppression des paquets de la priorité la plus haute qui ne sont pas des paquets de parole.

## Revendications

1. Procédé apte à rendre un équipement de réseau proactif, **caractérisé en ce qu'**il comprend l'échange de données entre un agent intelligent (13) et ledit équipement de réseau (1, 4, 20).

2. Procédé selon la revendication 1, **caractérisé en ce que** ledit équipement de réseau est constitué d'un routeur (1, 4, 20).

3. Procédé selon l'une des revendications précédentes, **caractérisé en ce que** ledit routeur comprend un sélectionneur (5) et un ordonnanceur (6).

4. Procédé selon la revendication 1, 2 ou 3, **caractérisé en ce que** ledit agent intelligent (13) est composé de sous-agents intelligents (14, 15, 24, 25, 26, 27, 28, 29, 30, 31).

5. Procédé selon la revendication 3 ou 4, **caractérisé en ce que** ledit routeur (1, 4, 20) est relié à un organe de gestion (11) des fonctions du routeur relié audit sélectionneur (5), audit ordonnanceur (6), à un métreur (24), à un marqueur (25) et à un suppresseur (26).

6. Procédé selon la revendication 5, **caractérisé en ce que** lesdits sous-agents intelligents (14, 15, 24, 25, 26, 27, 28, 29, 30, 31) sont un sous-agent du sélectionneur (14, 27), un sous-agent de l'ordonnanceur (15, 31), un sous-agent du métreur (28), un sous-agent du marqueur (29) et un sous-agent du suppresseur (30).

7. Procédé selon la revendication 5 ou 6, **caractérisé en ce qu'**il présente une relation continue entre ledit organe de gestion (11) des fonctions du routeur et ledit agent intelligent (13).

8. Procédé selon l'une des revendications 5, 6 ou 7, **caractérisé en ce que** ledit organe de gestion (11) est composé d'au moins un processeur et d'une mémoire.

9. Procédé selon l'une des revendications 5 à 8, **caractérisé en ce que** ledit organe de gestion (11) est apte à configurer ledit sélectionneur (5), ledit ordonnanceur (6), ledit métreur (21), ledit marqueur (22) et ledit suppresseur (23).

10. Procédé selon l'une des revendications 5 à 9, **caractérisé en ce que** ledit agent intelligent (13) est directement relié audit sélectionneur (5), audit ordonnanceur (6), audit métreur (21), audit marqueur (22) et audit suppresseur (23).
